# EUROPÄISCHE PATENTSCHRIFT

(11) **EP 1 922 246 B1**
(45) Veröffentlichungstag und Bekanntmachung des Hinweises auf die Patenterteilung: **16.02.2011**
(21) Anmeldenummer: 06775905.0
(22) Anmeldetag: 25.08.2006
(51) Int. Cl.: B63B 1/22, B63B 1/38, B63H 19/06

(54) **WASSERFAHRZEUG**
WATER CRAFT
VEHICULE MARIN

(30) Priorität: 31.08.2005 DE 102005041439
(43) Veröffentlichungstag der Anmeldung: 21.05.2008
(73) Patentinhaber: Nikolakis, Dimitrios, 22299 Hamburg (DE)
(72) Erfinder: Nikolakis, Dimitrios, 22299 Hamburg (DE)
(74) Vertreter: Groth, Wieland
(86) Internationale Anmeldenummer: PCT/DE2006/001487
(87) Internationale Veröffentlichungsnummer: WO 2007/025512

(56) Entgegenhaltungen:
- EP-A- 0 071 763
- DE-A1- 3 121 402

## Beschreibung

Die Erfindung betrifft ein Wasserfahrzeug mit einer Vortriebseinrichtung gemäß dem Anspruch 1 . Die Erfindung betrifft auch ein Verfahren zur Widerstandminderung eines durch eine Vortriebseinrichtung vorgetriebenen Wasserfahrzeugs und die Verwendung wenigstens einer Auftriebsklappe.

Wasserfahrzeuge sind als Überwasserfahrzeuge in Form von Motorbooten, Segelbooten, Motorschiffen, Segelschiffen usw. und als Unterwasserfahrzeuge in Form von U-Booten, Torpedos usw. hinlänglich bekannt. Die Fahrgeschwindigkeit der Wasserfahrzeuge gegenüber dem Wasser ist dabei wesentlich durch die Größe der Widerstand erzeugenden, durch das Wasser benetzten Unterwasserfläche und durch die installierte Leistung bestimmt und begrenzt.

Zur Erhöhung der Fahrgeschwindigkeit bei gleicher Leistung des Vortriebs ist es grundsätzlich bekannt, die Unterwasserfläche zu verkleinern. Dabei wird von dem bekannten Zusammenhang eines geringeren Widerstandes bei kleinerer Untenivasserfläche Gebrauch gemacht. Die Verkleinerung der Unterwasserfläche kann durch Ausnutzung des durch unter Wasser gegen die Strömungsrichtung schräge gestellte Auftriebsflächen erzeugten dynamischen Auftriebs erfolgen. Aus der WO 2004/067376 A3 ist bekannt, die Unterseite des Schiffsrumpfes mit verstellbaren Auftriebsklappen zu versehen, deren Länge in Strömungsrichtung des Wassers verstellbar ist. Zusätzlich zum Verdrängungsauftrieb wird in Abhängigkeit von der Fahrgeschwindigkeit des Bootes und dem Stellwinkel der Auftriebsklappe ein dynamischer Auftrieb erzeugt. Der dynamische Auftrieb hebt den Schiffsrumpf zusätzlich zum Verdrängungsauftrieb aus dem Wasser heraus, und er verringert damit die benetzte Fläche und somit den Widerstand.

Aus der FR 2652055 ist ein Schiffsrumpf mit den dynamischen Auftrieb mit zunehmender Geschwindigkeit erhöhenden, verstellbaren Auftriebsklappen bekannt.

Die US 6,901,873, B1 offenbart Tragflügel mit verstellbaren Nasen eines Tragflügelbootes zur Bildung von Diskontinuitäten. Im Bereich der Diskontinuitäten wird Luft in das Wasser hinein geblasen, um eine reibungsmindernde Luftblase auszubilden.

Die DE 31 21 402 A1 offenbart (siehe insbesondere Fig. 15 von dieser Offenbarung) ein Wasserfahrzeug laut dem Oberbegriff des Anspruchs 1.

Es ist Aufgabe der Erfindung, ein Wasserfahrzeug zur Verfügung zu stellen, das einen geringeren Widerstand im Wasser aufweist und ein Verfahren zur Widerstandminderung des Wasserfahrzeugs.

Die Aufgabe wird durch die Merkmale des kennzeichnenden Teils des Anspruchs 1 gelöst.

Es hat sich gezeigt, dass die Verbindung der wenigstens einen Auftriebsklappe mit wenigstens einem Luftaustritt bei der durch die in der Fahrposition ausgestellten Auftriebsklappe ausgebildeten Diskontinuität in der Untenivasserfläche zu einer erheblichen Widerstandsverminderung führt. Erfindungsgemäß wirken verschiedene widerstandsmindernde Effekte zusammen. Zum einen verringert der durch die Auftriebsklappe erzeugte dynamische Auftrieb und zum anderen verringert die zugeführte Luft die Größe der Unterwasserfläche und damit den Widerstand.

Die wenigstens eine Auftriebsklappe ist an der Unterwasserfläche des Wasserfahrzeugs angeordnet. Die Unterwasserfläche ist die vom Wasser benetzte Fläche, deren Größe von verschiedenen Parametern, wie Rumpfform, Gewicht des Wasserfahrzeuges usw. abhängig ist. Das Wasserfahrzeug ist vorzugsweise mit einem Motorantrieb antreibbar, um eine Fahrgeschwindigkeit gegenüber dem Wasser zu erzeugen. Bei hinreichender Fahrgeschwindigkeit ist durch Ausklappen der wenigstens einen Auftriebklappe ein dynamischer Auftrieb erzeugbar. Der dynamische Auftrieb hebt das Wasserfahrzeug ein Stück weit aus dem Wasser heraus und verringert damit die benetzte Fläche. Die Größe des Widerstandes verringert sich in bekannter Weise mit sich verrindernder Unterwasserfläche. Ab einer von der Form des Rumpfes, dem Gewicht des Wasserfahrzeugs und anderen Parametern abhängigen Geschwindigkeit, ist der beschriebene widerstandsmindernde Effekt durch das Ausstellen der Auftriebsklappe größer als die Vergrößerung des Widerstands aufgrund der damit erzeugten Vergrößerung des Rumpfquerschnitts senkrecht zur Fahrtrichtung des Wasserfahrzeugs.

Die erfindungsgemäße Anordnung von wenigstens einer Auftriebsklappe und wenigstens einem Luftaustritt ist sowohl bei Einrumpf- als auch bei Mehrrumpf-Wasserfahrzeugen montierbar. Sie kann bei Rundspant- oder Knickspant-Rümpfen, jeweils sowohl mit und ohne Aufkimmung angewendet und angeordnet werden.

Die wenigstens eine Auftriebsklappe ist vorzugsweise kontinuierlich zwischen einer Ruheposition und einher Fahrposition verstellbar. In der Ruheposition fluchtet die wenigstens eine Auftriebsklappe mit der Rumpfaussenwandung, und in der Fahrposition ist die wenigstens eine Auftriebsklappe in die Wasserströmung hinein ausgestellt und bildet so an der Unterwasserfläche eine Diskontinuität aus. Um die Längsachse symmetrisch angeordnete Auftriebsklappen können der Rumpfaussenwandung folgend eine Aufkimmung aufweisen.

Die wenigstens eine Auftriebsklappe ist vorzugsweise fest ausgebildet und quer zur Strömungsrichtung gelenkig an der Unterwasserfläche angeordnet. Es ist auch denkbar, die wenigstens eine Auftriebsklappe flexibel auszugestalten. Sie kann dann quer zur Strömungsrichtung fest oder auch gelenkig an der Unterwasserfläche montiert sein. Eine flexible wenigstens eine Auftriebsklappe kann auch entlang zweier vorzugsweise zueinander senkrechter Achsen drehbar oder fest an der Unterwasserfläche angeordnet sein, wobei eine Achse quer zur Strömungsrichtung und eine andere Achse in Strömungsrichtung verlaufen. Die wenigstens eine Auftriebsklappe kann mittels einer Verstelleinrichtung hydraulisch, mechanisch, pneumatisch, usw. verstellbar und einstellbar sein.

Die wenigstens eine Auftriebsklappe bildet in der Fahrposition eine Diskontinuität an der Unterwasserfläche aus. Die Diskontinuität führt während der Fahrt zu einer Wirbelbildung des Wassers in Strömungsrichtung hinter der Auftriebsklappe. Die Strömung reißt dort ab. Die hinter der Auftriebsklappe entstehenden Wasserwirbel bilden einen Unterdruck aus, der die Unterwasserfläche des Wasserfahrzeugs ansaugt. Der Saugeffekt wirkt dem dynamischen Auftrieb entgegen und erhöht den Widerstand.

Erfindungsgemäß ist in Strömungsrichtung hinter der Auftriebsklappe wenigstens ein Luftaustritt im Bereich der Wirbelbildung vorgesehen. Günstigenfalls ist der wenigstens ein Luftaustritt in der Unterwasserfläche von der wenigstens einen Auftriebsklappe beabstandet angeordnet. Der Luftaustritt kann eine durch einen Luftkanal eine mit der Außenluft Luft leitend in Verbindung stehende Luftaustrittsöffnung in der Unterwasserfläche aufweisen. Der Luftkanal verläuft vorzugsweise durch das Innere des Wasserfahrzeugs und verbindet die Umgebungsluft mit dem Unterdruckbereich unter dem Schiffsrumpf Luft leitend. Bei Unterwasserfahrzeugen, wie U-Booten oder Torpedos sowie bei Überwasserfahrzeugen kann die Luftaustrittsöffnung durch eine Luftleitung mit einem im Unterwasserfahrzeug angeordneten Luftbehälter mit geregelten und/oder gesteuertem Druck in Verbindung stehen.

In jeder Ausführungsform der Erfindung saugt der Unterdruck Luft durch die Luftausgangsöffnung über den Luftkanal und eine Öffnung im Deck aus der Atmosphäre oder aus dem Luftbehälter an. Die angesaugte Luft gelangt in den Bereich des verwirbelten Wassers und ersetzt dieses. Es entsteht auf diese Weise eine Luftblase in Strömungsrichtung hinter der wenigstens einen Auftriebsklappe.

Die Luftblase weist im Fall einer Verbindung zum Deck im Wesentlichen Umgebungsluftdruck auf. Die Saugwirkung der Wasserwirbel verschwindet damit und der dynamische Auftrieb kann seine volle Wirkung entfalten. Zudem verringert die Luftblase die benetzte Fläche hinter der wenigstens einen Auftriebsklappe und verringert so zusätzlich den Widerstand des Wassers.

Der Öffnungsquerschnitt der wenigstens einen Luftausgangsöffnung ist vorzugsweise unabhängig von der Ausstellung der Auftriebsklappe. Vorzugsweise ist die wenigstens eine Luftausgangsöffnung von der in Strömungsrichtung nachlaufenden Kante der wenigstens einen Auftriebklappe beabstandet. Der Luftaustritt kann mehrere entlang der nachlaufenden Kante angeordnete Luftausgangsöffnungen aufweisen. In einer anderen Ausführungsform der Erfindung ist die Luftausgangsöffnung als ein entlang der nachlaufenden Kante angeordneter länglicher Schlitz ausgebildet.

Es ist aber auch denkbar, Luftaustrittsöffnungen im Inneren des Wasserfahrzeugs anzuordnen und sie durch ausstellen der Auftriebsklappe in die Fahrposition zu öffnen und durch Einstellen der Auftriebsklappe in die Ruheposition zu schließen.

Die wenigstens eine Auftriebsklappe kann mehrere in Strömungsrichtung hintereinander und/oder mehrere quer zur Strömungsrichtung angeordnete Auftriebsklappen aufweisen. Die Form, der Umriss und die Anzahl der Auftriebsklappen können beinahe beliebig sein. Vorzugsweise ist die wenigstens eine Auftriebsklappe an einer vorlaufenden Kante gelenkig mit der Unterwasserfläche verbunden, und die Entfernung einer nachlaufenden Kante der wenigstens einen Auftriebsklappe ist zur Unterwasserfläche verstellbar.

Die Erfindung ermöglicht bei gleicher Motorleistung des Antriebs höhere Fahrgeschwindigkeiten bzw. bei einer vorgegebenen Geschwindigkeit die Verwendung von Motoren mit geringerer Nennleistung. Zusätzlich werden die Wasserfahrzeuge leichter manövrierbar. Die Auftriebsklappen können zur Manövrierung verwendet werden.

In einer bevorzugten Ausführungsform der Erfindung kann eine Steuereinrichtung vorgesehen sein, in der der Stellwinkel der Auftriebsklappe und der zugeführte Luftstrom insbesondere in Abhängigkeit von der Fahrgeschwindigkeit gesteuert werden.

Die Aufgabe wird hinsichtlich des Verfahrens durch ein eingangs genanntes Verfahren mit den Merkmalen des Anspruchs 21 gelöst.

Die Aufgabe wird auch durch die Verwendung einer Auftriebsklappe mit den Merkmalen des Anspruchs 23 gelöst. Erfindungsgemäß wird dabei eine ausstellbare Klappe sowohl als Auftriebsklappe zur Erzeugung eines Auftriebs für das vorgetriebene Wasserfahrzeug als auch zur Erzeugung einer Diskontinuität verwendet. Die Diskontinuität bewirkt einen Strömungsabriss. Die an der Diskontinuität entstehenden Wasserwirbel saugen durch den sich ausbildenden Unterdruck Luft durch den Luftaustritt in das Wasser und bilden eine Luftblase an der Unterwasserfläche aus. Der Widerstand wird durch die doppelte Verwendung der Auftriebsklappe zur Erzeugung eines Auftriebs und zusammen mit dem Luftaustritt zur Erzeugung einer Luftblase hinter einer Diskontinuität erfindungsgemäß. verringert.

Vorzugsweise kann die wenigstens eine Auftriebsklappe auch zur Bremsung des Wasserfahrzeugs verwendet werden. Dabei wird die Auftriebklappe so weit in die Strömung des Wassers ausgestellt, dass die Widerstands erhöhende Wirkung durch Vergrößerung der Querschnittsfläche des Wasserfahrzeugs quer zur Strömungsrichtung des Wassers größer ist als die Widerstands mindernde Wirkung durch insbesondere den Auftrieb. Zusätzlich kann zum gleichen Zweck die Luftaustrittsöffnung durch ein Ventil geschlossen werden oder es kann durch eine Pumpe die Luftblase unter dem Schiffsboden angesaugt werden, um den Ablösungswirbel hinter der Diskontinuität wieder herzustellen.

Durch Anordnung von wenigstens zwei Auftriebsklappen quer zur Strömungsrichtung des Wassers nebeneinander, können die beiden Auftriebsklappen durch eine separate Steuerung zur Manövrierung des Wasserfahrzeugs verwendet werden. Entsprechend können wenigstens zwei in Strömungsrichtung hintereinander angeordnete Auftriebsklappen zur Einstellung des Trimms des Wasserfahrzeugs verwendet werden.

Die Erfindung wird anhand eines Ausführungsbeispieles in 6 Figuren beschrieben. Dabei zeigen:
- Fig. 1: eine schematische Schnittansicht eines Strömungsverlaufes entlang einer Unterseite eines erfindungsgemäßen Schiffsrumpfes,
- Fig. 2: eine perspektivische Rückansicht eines Bugabschnitts eines erfindungsgemäßen Schiffsbodens in einer ersten Ausführungsform,
- Fig. 3: eine perspektivische Frontansicht des Schiffsbodens gemäß Fig. 2,
- Fig. 4: eine Draufsicht des Schiffsbodens gemäß Fig. 2 und Fig. 3,
- Fig. 5: eine schematische Ansicht der ersten Ausführungsform der Erfindung,
- Fig. 6: eine schematische Ansicht einer zweiten Ausführungsform der Erfindung.

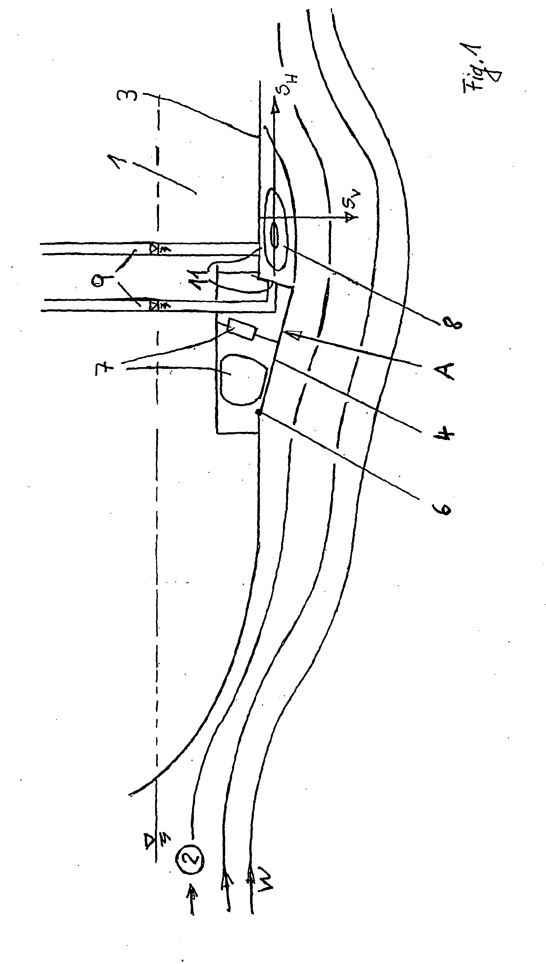

In Fig. 1 ist schematisch ein Bugabschnitt eines erfindungsgemäßen Schiffsrumpfes 1 dargestellt. Eine Aussenwandung des schwimmenden Schiffsrumpfes ist bis zur Höhe des Spiegels des Wasser 2 benetzt und bildet die in der Größe von unterschiedlichen Parametern, wie Beladung, Auftrieb usw. abhängige Unterwasserfläche 3 des Schiffrumpfes 1 aus. Das Schiff erfährt seinen Vortrieb durch (nicht eingezeichnete) Vortriebsmittel, wie Schiffschrauben, Segel, Überwasserpropeller, Jet usw. Das sich bei der Fahrt des Schiffes entlang der Unterwasserfläche ausbildende Strömungsprofil ist in Fig. 1 durch gerichtete Strömungslinien schematisch dargestellt.

Fig. 1 zeigt eine in einem der Meeresoberfläche abgewandten Bereich der Unterwasserfläche angeordnete Auftriebsklappe 4. Die Auftriebsklappe 4 weist eine senkrecht zu einer Schiffslängsrichtung verlaufende in Strömungsrichtung vordere Kante 6 auf. Die vordere Kante 6 ist mit der Unterwasserfläche 3 des Schiffesrumpfes 1 gelenkig verbunden und ermöglicht das Ausstellen der Auftriebsklappe 4 in einer Ausstellung gegen die Unterwasserfläche 3 in die Strömung hinein. Die Ausstellung ist durch eine Verstelleinrichtung 7 veränderbar und in ihrer jeweiligen Position arretierbar. Die Verstelleinrichtung 7 ist mit einem Ende an einer Innenseite der Auftriebsklappe 4 und mit einem dem einen Ende gegenüber verstellbaren anderen Ende im Innern des Schiffsrumpfes 1 befestigt.

Die ausgestellte Auftriebsklappe 4 erzeugt während der Fahrt des Schiffes einen am Schiffsrumpf 1 angreifenden dynamischen Auftrieb A, indem die Wasserströmung umgelenkt wird. Aus der damit verbundenen Impulsumlenkung resultiert der dynamische Auftrieb. Der dynamische Auftrieb A hebt den Schiffrumpf 1 ein Stück weit zusätzlich aus dem Wasser 2 heraus und verringert damit die Größe der Unterwasserfläche 3. Bei geeigneter Ausstellung wird der Widerstand verringert.

In Strömungsrichtung W hinter der Auftriebsklappe 4 entstehen herkömmlicherweise Wasserwirbel 8. Im Bereich der Wasserwirbel 8 bildet sich ein Unterdruck aus, der ebenfalls auf Bereiche der Unterwasserfläche 3 wirkt, und der die Unterwasserfläche 3 zum Meeresboden hin mit einer Saugkraft S ansaugt. Dadurch hebt sich der Schiffrumpf 1 weniger aus dem Wasser 2 und die Unterwasserfläche kann in ihrer Größe im Wesentlichen unverändert bleiben. Der dynamische Auftrieb A würde so zu keiner Widerstandsverminderung führen. Eine zum Meeresspiegel im Wesentlichen senkrechte Sᵥ Komponente der Saugkraft S wirkt dem dynamischen Auftrieb entgegen. Eine zum Meeresspiegel im Wesentlichen horizontale Komponente S_{H} der Saugkraft S ruft einen zusätzlichen Druckwiderstand hervor.

Der in Strömungsrichtung W hinter der Auftriebsklappe 4 vorgesehene, im Innern des Schiffrumpfes 3 verlaufende Luftkanal 9 mündet in eine Luftausgangsöffnung 11 in der Unterwasserfläche 3 und verbindet die Luftausgangsöffnung 11 mit der Außenluft. Im Ruhezustand des Schiffes ist der Luftkanal 9 bis zur Höhe des Meeresspiegels mit Wasser 2 gefüllt. Der sich während der Fahrt des Schiffes ausbildende Unterdruck im Bereich der Luftaustrittsöffnung 11, saugt zunächst die in dem Luftkanal 9 befindliche Wassersäule heraus, bis nur noch Luft im Luftkanal 9 ist. Dann wird durch den Unterdruck der weiterhin bestehenden Wasserwirbel 8 auch Außenluft über den Luftkanal 9 in den Wasserwirbel 8 hinein gesaugt. Die Luft bildet eine geschlossene oder offene Luftblase im Bereich der vorherigen Wasserwirbel 8 aus. Da die Luftblase über den Luftkanal 9 mit Außenluft direkt in Verbindung steht, herrscht in der Luftblase kein Unterdruck mehr sondern im Wesentlichen der atmosphärische Außendruck im Bereich der Meeresoberfläche. Dadurch wird die Saugkraft S des Wasserwirbels 8 unterbrochen. Durch den Abbruch der Saugkraft S fehlt die den dynamischen Auftrieb A mindernde Kraft und der Druckwiderstand.

Die freie Entfaltung des dynamischen Auftriebs A kann den Schiffrumpf 1 weiter aus dem Wasser 2 herausheben. Durch das Anheben wird die Größe der Unterwasserfläche 3 reduziert.

Durch das Auftreten der Luftblase ist die Rumpfaussenwandung hinter der Auftriebsklappe 4 nicht mehr benetzt und die Luftblase 8 verursacht eine zusätzliche Verringerung der Größe der benetzten Fläche.

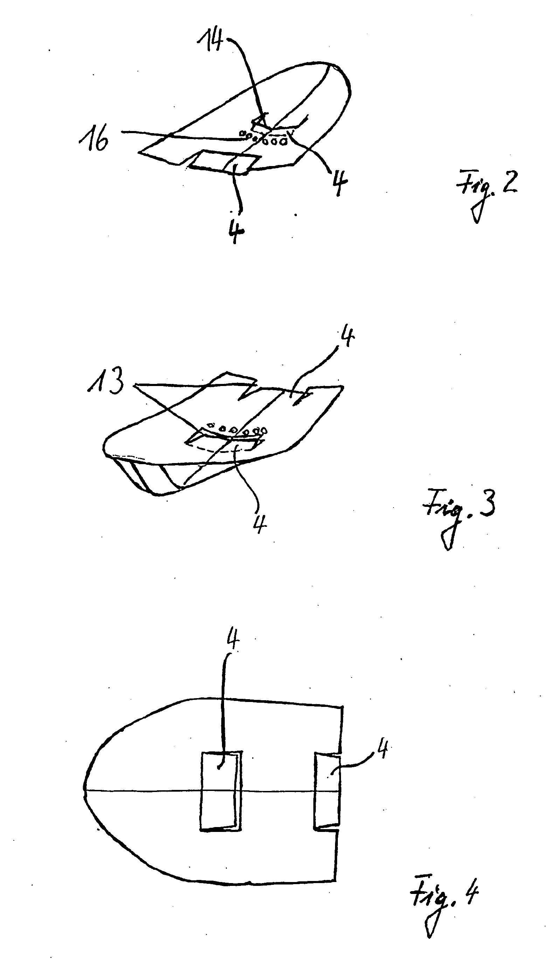

Fig. 2 zeigt den Schiffsboden 12 eines erfindungsgemäßen Schiffrumpfes 3 in einer perspektivischen Ansicht. In Längsrichtung L des Schiffrumpfes 3 sind nach außen klappbare Auftriebsklappenpaare 4 am Schiffsboden 12 angelenkt. Das in Strömungsrichtung vordere Auftriebsklappenpaar 4 als auch das in Strömungsrichtung hintere Auftriebsklappenpaar 4 weist zwei senkrecht zur Längsrichtung L angeordnete Auftriebsklappen 4 auf. Jede der Auftriebsklappen 4 ist im Wesentlichen in einem Querschnitt parallel zu einem Deck des Schiffes rechteckig ausgeformt und jeweils mittels einer zugeordneten (nicht eingezeichneten) Verstelleinrichtung 7 verstellbar. Jede der Auftriebsklappen 4 ist in der Ruheposition in einer für sie vorgesehenen Öffnung 13 im Schiffsboden 12 mit der Außenwandung des Schiffsbodens 12 fluchtend aufnehmbar. In Strömungsrichtung W hinter einer nachlaufenden Kanten 14 der Auftriebsklappenöffnung 13 sind jeweils drei Luftaustrittsöffnungen 16 parallel zur hinteren Kante 14 nebeneinander angeordnet.

Fig. 3 und Fig. 4 zeigen die zu Fig. 2 beschriebene Anordnung mit den Auftriebsklappen 4 in zwei weiteren Perspektiven.

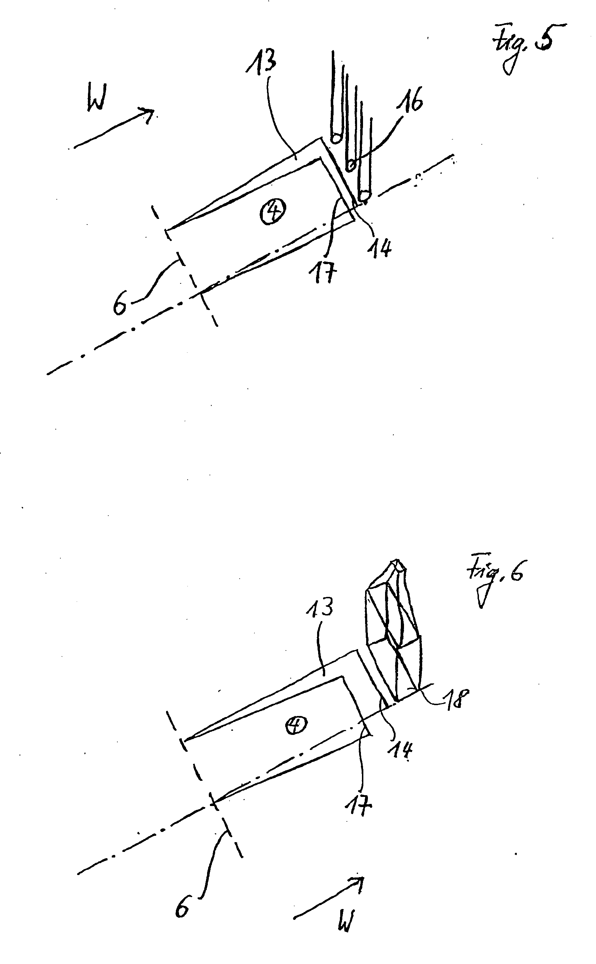

Der Luftaustritt kann auf verschiedene Arten ausgebildet sein. Fig. 5 zeigt ein Luftaustritt mit drei kreisförmigen Öffnungen 16 hinter jeder Auftriebsklappe 4, die in den Schiffsboden 12 entlang der nachlaufenden Kante 14 einer Auftriebsklappenöffnung 13 eingelassen sind. In einer Ruheposition ist die Auftriebsklappe 4 fluchtend mit der Unterwasserwandung 3 in der Auftriebsklappenöffnung 13 aufgenommen und in einer Fahrposition wird die Auftriebsklappe 4 um ein, an ihrer vorlaufenden Kante 6 angeordnetes Gelenk mit ihrem nachlaufenden Ende 17 in das Wasser hinein geklappt. Fig. 6 zeigt eine zweite Ausführungsform der Luftzufuhr. Dabei ist an der nachlaufenden Kante 14 der Auftriebsklappenöffnung 13 ein Lufteinlassschlitz 18 vorgesehen, der sich quer zur Strömungsrichtung W entlang der ganzen Ausdehnung der Auftriebsklappenöffnung 13 erstreckt.

## Patentansprüche

1. Wasserfahrzeug mit
einer Vortriebseinrichtung und
mit wenigstens einer Luftausgangsöffnung (16, 18) bei einer Diskontinuität (14, 17), und wenigstens einer an einer Unterwasserfläche (3) angeordneten, aus einer Ruheposition in eine Fahrposition anstellbaren Auftriebsklappe (4), die in der Fahrposition in Strömungsrichtung (W) des Wassers (2) entlang der Unterwasserfläche (3) des vorgetriebenen Wasserfahrzeugs zur Erzeugung eines Auftriebs in die Strömung hinein angestellt ist und die Diskontinuität (14, 17) an der Unterwasserfläche (3) ausbildet, **dadurch gekennzeichnet, dass** die wenigstens eine Luftausgangsöffnung (16, 18) in Strömungsrichtung (W) des Wassers entlang der Unterwasserfläche (3) des vorgetriebenen Wasserfahrzeugs hinter der wenigstens einen Auftriebsklappe (4) angeordnet ist und ein Öffnungsquerschnitt der wenigstens einen Luftausgangsöffnung (16, 18) unabhängig von der Ausstellung der Auftriebsklappe ist.

2. Wasserfahrzeug nach Anspruch 1,
**dadurch gekennzeichnet, dass** die Luftausgangsöffnung (16, 18) durch eine im Innern des Wasserfahrzeugs geführte Luftleitung (9) mit der Außenluft in Verbindung steht.

3. Wasserfahrzeug nach wenigstens einem der vorstehenden Ansprüche,
**dadurch gekennzeichnet, dass** die Unterwasserfläche (3) in der Ruheposition im Bereich der wenigstens einen Auftriebsklappe (4) im Wesentlichen stetig ist.

4. Wasserfahrzeug nach wenigstens einem der vorstehenden Ansprüche,
**dadurch gekennzeichnet, dass** die wenigstens eine Auftriebsklappe (4) einen Umriss aufweist, der abschnittsweise sowohl in der Ruhe- als auch in der Fahrposition an der Unterwasserfläche (3) angeordnet ist und abschnittsweise in der Fahrposition von der Unterwasserfläche (3) beabstandet ist.

5. Wasserfahrzeug nach Anspruch 4,
**dadurch gekennzeichnet, dass** der sowohl in der Ruhe- als auch in der Fahrposition an der Unterwasserfläche (3) angeordnete Abschnitt drehbar an der Unterwasserfläche (3) angeordnet ist.

6. Wasserfahrzeug nach Anspruch 4,
**dadurch gekennzeichnet, dass** der sowohl in der Ruhe- als auch in der Fahrposition an der Unterwasserfläche (3) angeordnete Abschnitt fest an der Unterwasserfläche (3) angeordnet ist.

7. Wasserfahrzeug nach Anspruch 4, 5 oder 6,
**dadurch gekennzeichnet, dass** die wenigstens eine Auftriebsklappe (4) wenigstens ein starres Segment aufweist.

8. Wasserfahrzeug nach Anspruch 4, 5 oder 6,
**dadurch gekennzeichnet, dass** die wenigstens eine Auftriebsklappe (4) flexibel ausgestaltet ist.

9. Wasserfahrzeug nach wenigstens einem der Ansprüche 4 bis 8,
**dadurch gekennzeichnet, dass** die Auftriebsklappe (4) in der Ruheposition mit der Unterwasserfläche (3) fluchtet und in der Fahrposition eine Flächennormale der wenigstens einen Auftriebsklappe (4) um eine Ausstellung stärker zum Bug des Wasserfahrzeugs geneigt ist als in der Ruheposition und eine in Strömungsrichtung (W) äußere Kante (17) der Auftriebsklappe (4) die Diskontinuität ausbildet.

10. Wasserfahrzeug nach wenigstens einem der Ansprüche 4 bis 9,
**dadurch gekennzeichnet, dass** die wenigstens eine Auftriebsklappe (4) an einer in Strömungsrichtung (W) vorlaufenden Kante (6) gelenkig mit der Unterwasserfläche (3) verbunden ist und die Entfernung einer nachlaufenden Kante (17) der wenigstens einen Auftriebsklappe (4) zur Unterwasserfläche (3) verstellbar ist.

11. Wasserfahrzeug nach wenigstens einem der vorstehenden Ansprüche,
**gekennzeichnet durch** eine der wenigstens einen Auftriebsklappe (4) zugeordneten Verstelleinrichtung (7).

12. Wasserfahrzeug nach Anspruch 1,
**gekennzeichnet durch** eine Vielzahl von entlang der nachlaufenden Kante (14) der Auftriebsklappenöffnung (13) angeordneten Luftaustrittsöffnungen (16).

13. Wasserfahrzeug nach Anspruch 1,
**gekennzeichnet durch** einen entlang der gesamten Ausdehnung der nachlaufenden Kante (14) der Auftriebsklappenöffnung (13) ausgebildeten Luftaustrittsschlitz (18).

14. Wasserfahrzeug nach wenigstens einem der vorstehenden Ansprüche,
**dadurch gekennzeichnet, dass** die Vortriebseinrichtung einen Motor aufweist.

15. Verfahren zur Widerstandsminderung eines durch eine Vortriebseinrichtung vorgetriebenen Wasserfahrzeugs, insbesondere nach einem der vorstehenden Ansprüche, indem
wenigstens eine an einer Unterwasserfläche (3) angeordnete Auftriebsklappe (4), aus einer Ruheposition in eine Fahrposition angestellt wird und
die wenigstens eine Auftriebsklappe (4) in der Fahrposition in Strömungsrichtung (W) des Wassers (2) entlang der Unterwasserfläche (3) des vorgetriebenen Wasserfahrzeugs zur Erzeugung eines Auftriebs in die Strömung hinein angestellt wird und
durch die angestellte Auftriebsklappe (4) eine Diskontinuität (14, 17) an der Unterwasserfläche (3) ausgebildet wird,
**dadurch gekennzeichnet, dass** Luft durch wenigstens eine Luftausgangsöffnung (16, 18), die in Strömungsrichtung (W) des Wassers entlang der Unterwasserfläche (3) des vorgetriebenen Wasserfahrzeugs hinter der wenigstens einen Auftriebsklappe (4) angeordnet ist und ein Öffnungsquerschnitt der wenigstens einen Luftausgangsöffnung (16, 18) unabhängig von der Ausstellung der Auftriebsklappe (4) ist bei der Diskontinuität (14, 17) dem Wasser zur Ausbildung einer Luftblase an der Unterwasserfläche (3) zugeführt wird.

16. Verfahren nach Anspruch 15,
**dadurch gekennzeichnet, dass** die Luft durch das Wasserfahrzeug hindurch geleitet wird.

17. Verfahren nach Anspruch 16 oder 17,
**dadurch gekennzeichnet, dass** die Luft dem Wasser in Strömungsrichtung (W) des Wassers (2) hinter der wenigstens einen Auftriebsklappe (4) zugeführt wird.

18. Verwendung wenigstens einer an einer Untervvasserfläche (3) angeordneten, aus einer Ruheposition in einer Fahrposition in die Strömung in Strömungsrichtung (W) des Wassers (2) entlang der Unterwasserfläche (3) des mit einer Vortriebseinrichtung vorgetriebenen Wasserfahrzeugs, insbesondere nach einem der Ansprüche 1 bis 14, hinein ausstellbaren Klappe als Auftriebsklappe (4) zur Erzeugung eines Auftriebs und als Diskontinuität (14, 17) an der Unterwasserfläche (3) zur Erzeugung eines Unterdrucks in Strömungsrichtung (W) des Wassers (2) entlang der Unterwasserfläche (3) hinter der wenigsten eines Auftriebsklappe (4), um Luft durch wenigstens eine Luftausgangsöffnung (16, 18), die in Strömungsrichtung (W) des Wassers entlang der Untervvasserfläche (3) des vorgetriebenen Wasserfahrzeugs hinter der wenigstens einen Auftriebsklappe (4) angeordnet ist und wiederum ein Öffnungsquerschnitt, der wenigstens einen Luftausgangsöffnung (16, 18) unabhängig von der Ausstellung der Auftriebsklappe (4) ausgebildet ist, dem Wasser (2) zuzuführen.

## Claims

1. A watercraft having
a propulsion device and
having at least one air outlet opening (16, 18) next to a discontinuity (14, 17), and at least one lift flap (4), arranged at an underwater surface (3) and positionable from a rest position into a travel position, which in the travel position is, in the flow direction (W) of the water (2) along the underwater surface (3) of the propelled watercraft, positioned into the flow in order to generate lift and forms the discontinuity (14, 17) at the underwater surface (3), **characterised in that** the at least one air outlet opening (16, 18) is arranged after the at least one lift flap (4) in the flow direction (W) of the water along the underwater surface (3) of the propelled watercraft and an opening cross-section of the at least one air outlet opening (16, 18) is independent of the raised position of the lift flap.

2. A watercraft according to claim 1, **characterised in that** the air outlet opening (16, 18) is connected to the ambient air by an air line (9) guided within the watercraft.

3. A watercraft according to at least one of the preceding claims, **characterised in that** in the rest position, the underwater surface (3) is substantially continuous in the region of the at least one lift flap (4).

4. A watercraft according to at least one of the preceding claims, **characterised in that** the at least one lift flap (4) has a contour of which portions are, both in the rest position and in the travel position, arranged on the underwater surface (3) and of which portions are, in the travel position, arranged at a distance from the underwater surface (3).

5. A watercraft according to claim 4, **characterised in that** the portion arranged on the underwater surface (3) both in the rest position and in the travel position is rotatably arranged on the underwater surface (3).

6. A watercraft according to claim 4, **characterised in that** the portion arranged on the underwater surface (3) both in the rest position and in the travel position is securely arranged on the underwater surface (3).

7. A watercraft according to claim 4, 5 or 6, **characterised in that** the at least one lift flap (4) has at least one rigid segment.

8. A watercraft according to claim 4, 6 or 6, **characterised in that** the at least one lift flap (4) is flexible.

9. A watercraft according to at least one of claims 4 to 8, **characterised in that** the lift flap (4) is aligned with the underwater surface (3) in the rest position, and a surface normal of the at least one lift flap (4) about a raised position has a greater inclination with respect to the prow of the watercraft in the travel position than in the rest position, and an edge (17), outer in the flow direction (W), of the lift flap (4) forms the discontinuity.

10. A watercraft according to at least one of claims 4 to 9, **characterised in that** the at least one lift flap (4) is connected in an articulated manner to the underwater surface (3) at an edge (6) leading in the flow direction (W), and the distance of a trailing edge (17) of the at least one lift flap (4) from the underwater surface (3) is adjustable.

11. A watercraft according to at least one of the preceding claims, **characterised by** an adjusting device (7) associated with the at least one lift flap (4).

12. A watercraft according to claim 1, **characterised by** a plurality of air outlet openings (16) arranged along the trailing edge (14) of the lift-flap opening (13).

13. A watercraft according to claim 1, **characterised by** an air outlet slot (18) formed along the entire extent of the trailing edge (14) of the lift-flap opening (13).

14. A watercraft according to at least one of the preceding claims, **characterised in that** the propulsion device has a motor.

15. A method for resistance reduction of a watercraft propelled by a propulsion device, in particular according to any one of the preceding claims, by at least one lift flap (4), arranged at an underwater surface (3), being positioned from a rest position into a travel position and in the travel position the at least one lift flap (4) being, in the flow direction (W) of the water (2) along the underwater surface (3) of the propelled watercraft, positioned into the flow in order to generate lift and a discontinuity (14, 17) being formed at the underwater surface (3) by the positioned lift flap (4), **characterised in that** through at least one air outlet opening (16, 18), which is arranged after the at least one lift flap (4) in the flow direction (W) of the water along the underwater surface (3) of the propelled watercraft and an opening cross-section of the at least one air outlet opening (16, 18) is independent of the raised position of the lift flap (4), next to the discontinuity (14, 17) air is supplied to the water to form an air pocket at the underwater surface (3).

16. A method according to claim 15, **characterised in that** the air is directed through the watercraft.

17. A method according to claim 16 or 17, **characterised in that** the air is supplied to the water, after the at least one lift flap (4) in the flow direction (W) of the water (2).

18. Use of at least one flap, arranged at an underwater surface (3) and raisable from a rest position into a travel position into the flow in flow direction (W) of the water (2) along the underwater surface (3) of the watercraft propelled by a propulsion device, in particular according to any one of claims 1 to 14, as a lift flap (4) to generate lift and as a discontinuity (14, 17) at the underwater surface (3) for producing an underpressure after the at least one lift flap (4) in the flow direction (W) of the water (2) along the under water surface (3) in order to supply air to the water (2) through at least one air outlet opening (16, 18) arranged after the at least one lift flap (4) in the flow direction (W) of the water along the underwater surface (3) of the propelled watercraft and in turn an opening cross-section of the at least one air outlet opening (16, 18) is formed independent of the raised position of the lift flap (4).

## Revendications

1. Véhicule aquatique qui comprend :
- un dispositif de propulsion,
- au moins une ouverture de sortie d'air (16, 18), dans une discontinuité (14, 17),
- au moins un clapet de levée (4) pouvant passer d'une position de repos à une position de circulation dans laquelle il est mis en incidence dans le sens de l'écoulement (W) de l'eau (2) le long de la surface immergée (3) du véhicule propulsé pour créer une poussée ascensionnelle dans cet écoulement et pour former la discontinuité (14, 17) sur la surface immergée (3),
ce véhicule étant **caractérisé en ce que** l'ouverture de sortie d'air (16, 18), au nombre d'une au moins, est disposée dans la direction de l'écoulement (W) de l'eau le long de la surface immergée (3) du véhicule propulsé, derrière le clapet de levée (4) au nombre d'un au moins avec, pour cette ouverture (16, 18) une section d'ouverture indépendante de la position du clapet de levée.

2. Véhicule aquatique selon la revendication 1, **caractérisé en ce que** l'ouverture de sortie d'air (16, 18) est reliée à l'atmosphère par une conduite d'air (9) passant à l'intérieur du véhicule aquatique.

3. Véhicule aquatique selon au moins une des revendications précédentes, **caractérisé en ce qu'**en position de repos, la surface immergée (3) se trouve en permanence essentiellement dans la zone du clapet de levée (4) au nombre d'un au moins.

4. Véhicule aquatique selon au moins une des revendications précédentes, **caractérisé en ce que** le clapet de levée (4), au nombre d'un au moins, présente un contour qui, en position de repos comme en position de déplacement, se trouve en partie sur la surface immergée tandis qu'en position de déplacement, il se trouve en partie éloigné de cette surface (3).

5. Véhicule aquatique selon la revendication 4, **caractérisé en ce que** la partie qui, en position de repos comme en position de déplacement, se trouve sur la surface immergée (3), peut tourner sur cette surface.

6. Véhicule aquatique selon la revendication 4, **caractérisé en ce que** la partie qui, en position de repos comme en position de déplacement, se trouve sur la surface immergée (3), est montée fixe sur cette surface.

7. Véhicule aquatique selon la revendication 4, 5 ou 6, **caractérisé en ce que** le clapet de levée (4), au nombre d'un au moins, présente au moins un segment rigide.

8. Véhicule aquatique selon la revendication 4, 5 ou 6, **caractérisé en ce que** le clapet de levée (4), au nombre d'un au moins, est flexible.

9. Véhicule aquatique selon au moins une des revendications 4 à 8, **caractérisé en ce que** le clapet de levée (4), en position de repos est aligné avec la surface immergée (3) et, en position de déplacement, présente une normale qui est plus inclinée vers l'étrave qu'en position de repos, et le bord externe (17) du clapet (4) situé dans le sens de l'écoulement (W) formant la discontinuité.

10. Véhicule aquatique selon au moins une des revendications 4 à 9, **caractérisé en ce que** le clapet de levée (4), au nombre d'un au moins, est, le long de son arête située en amont, articulé à la surface immergée (3) par rapport au sens de l'écoulement (W) et l'éloignement de l'arête (17) du clapet de levée (4), située en aval est réglable, par rapport à la surface immergée (3).

11. Véhicule aquatique selon au moins une des revendications précédentes, **caractérisé en ce qu'**il présente un dispositif de réglage (7) associé au clapet de levée (4), au nombre d'un au moins.

12. Véhicule aquatique selon la revendication 1, **caractérisé en ce qu'**il présente une pluralité d'ouvertures de sortie d'air (16) disposées le long de l'arête (14), située en aval, de l'ouverture (13) du clapet de levée.

13. Véhicule aquatique selon la revendication 1, **caractérisé en ce qu'**il présente une fente de sortie d'air (18) disposée le long de toute l'étendue de l'arête aval (14) de l'ouverture de clapet de levée (13).

14. Véhicule aquatique selon au moins une des revendications précédentes, **caractérisé en ce que** le dispositif de propulsion comprend un moteur.

15. Procédé pour réduire la résistance d'un véhicule aquatique entrainé par un dispositif de propulsion, en particulier selon une des revendications précédentes, selon lequel :
- au moins un clapet de levée (4) situé sur la surface immergée (3) passe de la position de repos à la position de déplacement et dans celle-ci le clapet de levée (4) au nombre d'un au moins, est mis en incidence dans le sens de l'écoulement (W) de l'eau (2) le long de la surface immergée de manière à produire une poussée ascensionnelle dans l'écoulement,
- le clapet de levée (4) mis en incidence crée une discontinuité (14, 17) le long de la surface immergée (3),
ce procédé étant **caractérisé en ce qu'**à travers au moins une ouverture de sortie d'air (16, 18) qui, par rapport au sens d'écoulement (W) de l'eau le long de la surface immergée (3) du véhicule aquatique propulsé, est disposée en aval du clapet de levée (4) au nombre d'un au moins et présente une section d'ouverture indépendante de la position du clapet de levée (4), de l'air est amené dans l'eau au niveau de la discontinuité (14, 17) de manière à former une bulle d'air le long de la surface immergée (3).

16. Procédé selon la revendication 15, **caractérisé en ce que** l'air est amené à travers le véhicule aquatique.

17. Procédé selon la revendication 16 ou 17, **caractérisé en ce que** l'air est amené à l'eau en aval d'un clapet de levée (4) au nombre d'un au moins, par rapport au sens de l'écoulement (W) de l'eau (2).

18. Utilisation d'au moins un clapet disposé le long de la surface immergée (3) d'un véhicule aquatique entrainé par un dispositif de propulsion et pouvant, en passant d'une position de repos à une position de déplacement, être mis en incidence dans l'écoulement (W) de l'eau (2) dans le sens (W) de cet écoulement, en particulier selon les revendications 1 à 14, en tant que clapet de levée (4) pour créer une poussée ascensionnelle et également, en tant que discontinuité (14, 17) pour créer le long de la surface immergée (3), une dépression dans le sens d'écoulement (W) de l'eau (2) le long de la surface immergée (3) en aval de ce clapet (4) au nombre d'un au moins, et pour, à travers au moins une ouverture de sortie d'air (16, 18) qui, par rapport au sens d'écoulement (W) de l'eau le long de la surface immergée (3) du véhicule aquatique propulsé, est disposée en aval du clapet de levée (4) au nombre d'un au moins, et présente une section d'ouverture indépendante de la position du clapet de levée (4), amener de l'air dans l'eau au niveau de la discontinuité (14, 17) de manière à former une bulle d'air le long de la surface immergée (3).
